**Europäisches Patentamt**

**European Patent Office**

**Office européen des brevets**

(11) Veröffentlichungsnummer: **0 061 621**
**B1**

(12) **EUROPÄISCHE PATENTSCHRIFT**

(45) Veröffentlichungstag der Patentschrift:
**24.07.85**

(21) Anmeldenummer: **82101954.4**

(22) Anmeldetag: **11.03.82**

(51) Int. Cl.⁴: **H 02 B 1/18**

(54) Einrichtung zur mechanischen Halterung und elektrischen Verbindung von Installationsgeräten.

(30) Priorität: **25.03.81  DE 3111801**

(43) Veröffentlichungstag der Anmeldung:
**06.10.82 Patentblatt 82/40**

(45) Bekanntmachung des Hinweises auf die Patenterteilung:
**24.07.85 Patentblatt 85/30**

(84) Benannte Vertragsstaaten:
**AT BE CH FR IT LI NL**

(56) Entgegenhaltungen:
**DE - A - 2 543 959**
**DE - B - 1 248 774**
**DE - B - 1 277 410**

(73) Patentinhaber: **Siemens Aktiengesellschaft, Berlin und München Wittelsbacherplatz 2, D-8000 München 2 (DE)**

(72) Erfinder: **Rollinger, Ferdinand, Karlsbader Strasse 6, D-8400 Regensburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine Einrichtung zur mechanischen Halterung und elektrischen Verbindung von Installationsgeräten, wie Leitungsschutzschaltern, Fehlerstromschutzschaltern, Sicherungen und dgl., an bzw. mit Stromschienen, die einen im wesentlichen plattenförmigen Grundkörper aus Isolierstoff aufweist, der Träger von auf die Stromschienen aufsetzbaren gabelförmigen Kontakten ist, die in ‹–› mit ersten Enden von an dem plattenförmigen Grundkörper festgelegten Verbindungsschienen ‹elektrischer Verbindung› stehen, an deren zweiten, im Randbereich des Grundkörpers liegenden Enden Anschlussstellen für die elektrische Verbindung mit den zu halternden Installationsgeräten vorgesehen sind.

Bei einer bekannten derartigen Einrichtung (DE-A1 2 543 959) sind an den ersten Enden von Verbindungsschienen, die den Stromschienen zugewandt sind, Kontaktfedern angeformt. Diese Kontaktfedern liegen in einer Ebene quer zur Erstreckungsrichtung der Stromschienen. Die Verbindungsschienen sind hierzu abgewinkelt ausgebildet. Damit solche Kontakte, die durch eine Ausstanzung aus einem Streifen sich herstellen lassen, überhaupt federn können, sind sie mit verhältnismässig langen Gabelarmen zu versehen. Die Trageinrichtung ist deshalb insgesamt verhältnismässig hoch aufgebaut. Dennoch weisen so ausgebildete Kontakte nicht die in der Praxis erforderlichen Kontaktkräfte je Kontaktarm auf.

Eine andere bekannte Tragvorrichtung (DE-U 7 923 422) ist aus einzelnen Verteiler-Stromschienen aufgebaut, die durch Isolierstücke in Richtung der Tragschienen unter Abstand miteinander verbunden sind. An den Verteilerstromschienen sind Bügel angeordnet, die an einem horizontal zur Verteiler-Stromschiene verlaufenden Arm eine Spannschraube mit daran geführter Kralle aufweisen. Für den elektrischen Anschluss von Installationsgeräten, die auf den Tragschienen der Haltevorrichtung aufgereiht sind, sind elektrische Verbindungsmittel gesondert anzuschliessen. Eine Trageinrichtung dieser Art weist verhältnismässig viele einzelne Teile auf. Zum Montieren ist sie leicht schräg auf die Schienen einzufädeln. Das trifft auch auf Stromkreisleisten zu, die mit hakenartigen, die Sammelschiene umgreifenden Fortsätzen an rückseitigen Anschlussbügeln an den Sammelschienen von der Frontseite her einzuhängen sind (beispielsweise DE-B1 1 277 410). Dennoch sind solche Trageinrichtungen wesentlich vorteilhafter als bekannte Reitersicherungen, deren Tragvorrichtung mit Laschen und je zwei Schrauben an den Schienen zu befestigen sind (DE-U 7 510 399).

Der Erfindung liegt die Aufgabe zugrunde, eine Einrichtung zu entwickeln, die auf Stromschienen einfach und geradlinig aufgesteckt werden kann, die in Herstellung und Montage besonders einfach ist, einen besonders niedrigen Aufbau ermöglicht und dennoch ausreichende Kontaktkräfte aufbringen lässt.

Die Lösung der geschilderten Aufgabe besteht nach der Erfindung darin, dass der plattenförmige Grundkörper und jedes erste Ende der Verbindungsschienen im Bereich des diesem Ende zugeordneten gabelförmigen Kontaktes je eine Ausnehmung aufweisen, die von zwei den gabelförmigen Kontakt bildenden Kontaktstücken durchragt werden, dass an den Kontaktstücken mittig jeweils eine Kippnase ausgebildet ist, mittels derer sich die Kontaktstücke gegeneinader abstützen, dass benachbart zu diesen Kippnasen auf der den Stromschienen abgewandten Seite der Kontakte zwischen den Kontaktstücken eine diese auseinanderspreizende, die Kontaktstücke in der Ausnehmung der zugehörigen Verbindungsschiene fixierende und den Anpressdruck an die Stromschienen erzeugende Feder angeordnet ist und dass der plattenförmige Grundkörper Träger zumindest von einer der Befestigung für die Installationsgeräte dienenden Profilschiene ist.

Eine solche Trageinrichtung lässt sich einfach auf Stromschienen aufsetzen, wobei zwischen den Kontaktstücken eine Feder mit der gewünschten Kontaktkraft werksseitig eingelegt werden kann. Nachdem die zu befestigenden Installationsgeräte auf der Tragschiene aufgeschnappt sind, können sie bequem am Geräteanschluss, an der beweglichen Leitung, angeschlossen werden. Der Geräteanschluss kann mit der Verbindungsschiene verschweisst sein und einen Kabelschutz zum Anschliessen des Gerätes aufweisen.

Setzt man zwischen den Kontaktstücken eine Feder ein, die im Prinzip haarnadelförmig ausgebildet ist, kann man eine besonders niedrige Bauweise erzielen, indem man die Feder mit ihrer Erstreckungsebene senkrecht zur Erstreckungsebene des gabelförmigen Kontaktstückes anordnet.

Die Trageinrichtung lässt sich besonders leicht auf Stromschienen aufsetzen, wenn der gabelförmige Kontakt eine innere Maulöffnung aufweist, die geringfügig kleiner als die Breite der Stromschiene ist, und wenn an der Gabel eine flache Anlaufschräge ausgebildet ist.

Ein einfacher Aufbau besteht darin, dass ein im wesentlichen plattenförmiger Abdeckkörper aus Isoliermaterial zumindest eine Tragschiene haltert.

Grundkörper und ein Abdeckkörper können mittels Hohlnieten miteinander verbunden sein, die Schrauben führen, an deren Ende Spannriegel aus Isolierstoff aufgenommen sind. Diese Spannriegel werden unverlierbar gehalten, wenn das Ende der sie jeweils haltenden Schraube etwas breitgestaucht ist.

Im Basiskörper können gestaffelt mehrere Kontakte angeordnet sein, zwischen denen die Spannriegel bei entsprechender Länge so angeordnet sind, dass sie bei Linksdrehung der Schraube sich zumindest an einer Stirnseite eines Kontaktes anlegen und bei Rechtsdrehung an dessen Flanke. Die Kontakte führen dann der Reihe nach zu den einzelnen Stromschienen. Die Kontakte oder Wulste am Kontaktdurchtritt am Grundkörper begrenzen dann jeweils den Schwenkweg eines Sperriegels und zwar bei Linksdrehung in einer Ausgangslage und bei Rechtdrehung in der Spannlage.

Die Tragschiene kann als randseitig hochgekröpftes Metallband ausgebildet sein, das auf einem Sockel des Abdeckkörpers befestigt ist. Es ist günstig, die Tragschiene anzuschrauben und Zwischenstücke bereitzustellen, die den Abstand zwischen Sockel und Metallband vergrössern. Dadurch kann man die Trageinrichtung an verschiedene Bauhöhen anpassen.

Die Trageinrichtung rechtwinklig zum Verlauf der Stromschienen aufzusetzen, wird erleichtert, wenn am Grundkörper gabelförmige Halterungen aus Isolierstoff ausgebildet sind.

Zwischen Hohlniet und Schraube kann man einen das Spiel in etwa ausfüllende Bremsring anordnen. Dadurch stellt man sicher, dass die Sperriegel in der Ausgangslage durch Erschütterungen nicht verdreht werden, so dass man die Trageinrichtung sicher leicht aufsetzen kann.

Die Erfindung soll anhand von in der Zeichnung grob schematisch wiedergegebenen Ausführungsbeispielen näher erläutert werden:

In Fig. 1 ist eine Trageinrichtung im Querschnitt wiedergegeben.

In Fig. 2 ist die Trageinrichtung nach einem Schnitt längs II–II nach Fig. 1 in Aufsicht dargestellt.

In Fig. 3 ist eine anders ausgebildete Trageinrichtung im Querschnitt wiedergegeben.

In Fig. 4 ist eine Trageinrichtung, wie sie in Fig. 1 dargestellt ist, bei Ansicht auf die Querseite zusammen mit einem aufgesetzten Sicherungsschalter dargestellt.

In Fig. 5 ist die Aufsicht auf eine Trageinrichtung nach Fig. 1 dargestellt.

In Fig. 6 ist ein Längschnitt durch die Trageinrichtung, nach einem Schnitt bei VI–VI nach Fig. 5, wiedergegeben.

In Fig. 7 ist die Trageinrichtung nach Fig. 5 bei Ansicht von unten wiedergegeben.

In Fig. 8 ist die Trageinrichtung in Ansicht von der Querseite veranschaulicht, bei der die Tragschiene durch ein Zwischenstück hochgesetzt ist.

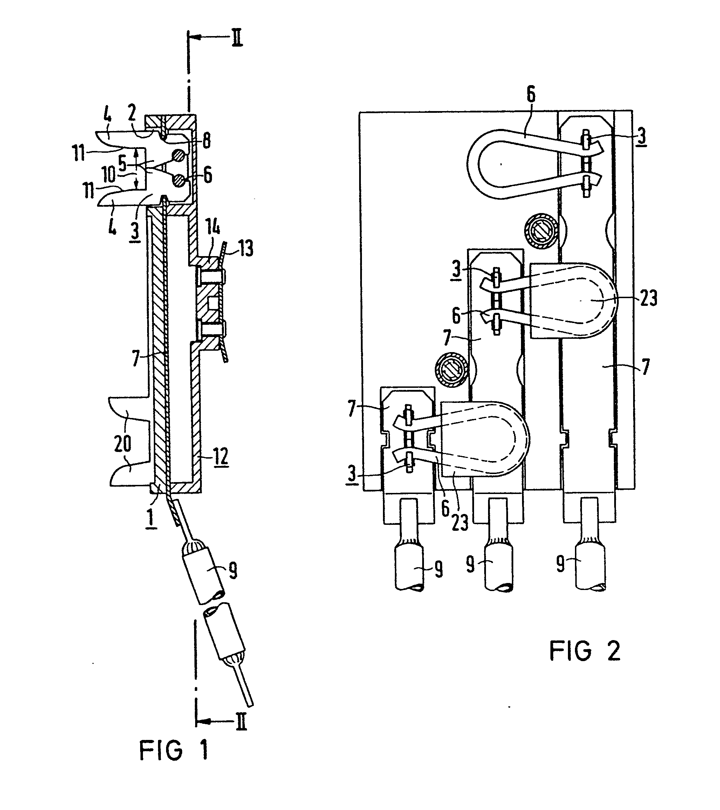

Die Trageinrichtung nach Fig. 1 besteht aus einem im wesentlichen plattenförmigen Grundkörper 1 aus Isoliermaterial, der je Pol eine Ausnehmung 2 für einen gabelförmigen Kontakt 3 aufweist. Dieser besteht aus zwei einzelnen Kontaktstücken 4 mit je einer mittig ausgebildeten Kippnase 5, an der sich die Kontaktstücke 4 gegeneinander abstützen. Oberhalb der Kippnase 5 ist zwischen den Kontaktstücken 4 eine Feder 6 eingesetzt. Vom gabelförmigen Kontakt 3 ist zum Rand des Grundkörpers 1 eine Verbindungsschiene 7 geführt, die mit einer entsprechenden Ausnehmung 8 zugleich das Widerlager für die Kontaktstücke 4 bildet. Am Rande des Grundkörpers 1 ist an der Verbindungsschiene 7 eine bewegliche Leitung 9 angeschlossen.

Die Feder 6 ist im Ausführungsspiel nach Fig. 1 im Prinzip haarnadelförmig ausgebildet, wie es aus Fig. 2 deutlicher zu ersehen ist, wo drei Federn 6 in zusammendedrückter Arbeitsstellung wiedergegeben sind. Die Feder 6 steht mit ihrer Erstreckungsebene senkrecht zur Erstreckungsebene des gabelförmigen Kontaktes 3, wodurch ein besonders niedriger Aufbau der Trageinrichtung erzielt wird.

Der gabelförmige Kontakt 3 weist eine innnere Maulöffnung 10 auf, die nur geringfügig kleiner als die Breite einer Stromschiene ist, auf die der Kontakt aufgesetzt werden soll. Die Gabel ist mit einer flachen Anlaufschräge 11 versehen.

Die Trageinrichtung nach Fig. 1 besteht weiter aus einem im wesentlichen plattenförmigen Abdeckkörper 12 aus Isoliermaterial, der zumindest eine Tragschiene 13 auf einem Sockel 14 haltert.

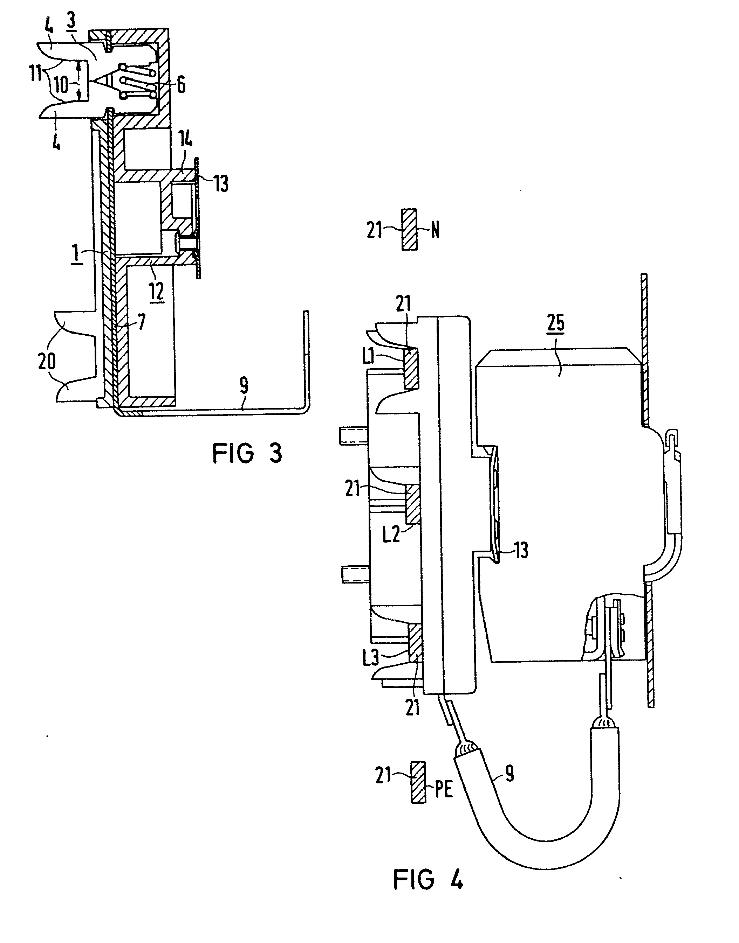

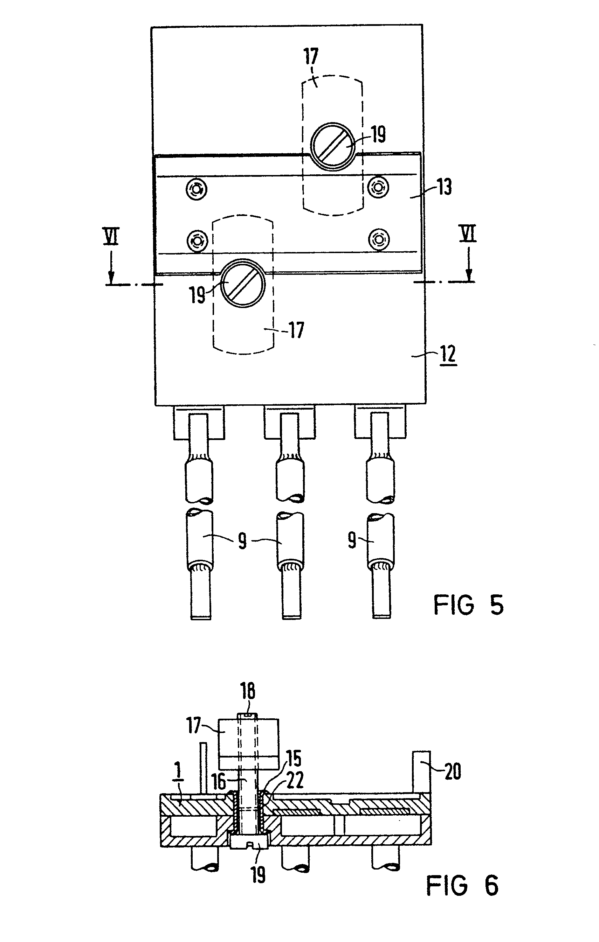

Grundkörper 1 und Abdeckkörper 12 können mittels Hohlnieten 15 miteinander verbunden sein, wie es in Fig. 6 veranschaulicht ist. Die Hohlnieten 15 führen jeweils ein Schraube 16, an deren Ende ein Spannriegel 17 aus Isolierstoff aufgenommen ist. Durch Ankörnung 18 oder durch leichtes Anstauchen des Schraubenendes wird der Spannriegel 17 unverlierbar. Die Schrauben 16 können an ihrem Schraubenkopf 19 von der Vorderseite der Spanneinrichtung betätigt werden. Am Grundkörper 1 sind gabelförmige Halterungen 20 aus Isolierstoff ausgebildet, um die Trageinrichtung bequem rechtwinklig auf Stromschienen 21 nach Fig. 4 aufsetzen zu können. Man vergleiche auch Fig. 1. In Fig. 4 können Stromschienen 21 von oben nach unten gesehen als Schienen für N, L1, L2, L3 und PE verstanden werden. Um zwei Hohlniet und Schraube das Spiel zu beseitigen, ist nach Fig. 6 ein Bremsring 22, beispielsweise eine Feder, eingesetzt.

Es ist günstig, die Feder 6 bei haarnadelförmiger Ausbildung in einer Erstreckungsebene senkrecht zur Erstreckungsebene der gabelförmigen Kontakte 3 mit Taschen 23 aus Isoliermaterial gegen die Verbindungsschienen 7 zu isolieren, wie es in Fig. 2 veranschaulicht ist. Dadurch erzielt man einen besonders niedrigen und dennoch sicheren Aufbau.

In Fig. 3 ist eine etwas höher ausgebildete Spanneinrichtung wiedergegeben, deren Feder 6 als Schraubenfeder ausgebildet ist, die zwischen den Kopfteilen der Kontaktstücke 4 eingesetzt ist. Die Tragschiene kann dann wegen der höheren Bauweise auch des Sockels 14 als ein ebenes Metallband ausgebildet sein. Der bewegliche Geräteanschluss 9 ist hier als biegbares Metallband realisiert.

In Fig. 4 ist auf der Tragschiene 13 der Tragrichtung nach der Fig. 1 wiedergegebene Art ein Installationsgerät 25, im Ausführungsbeispiel ein Sicherungsschalter, aufgesetzt und angeschlossen. Mit 21 sind die Stromschienen bezeichnet.

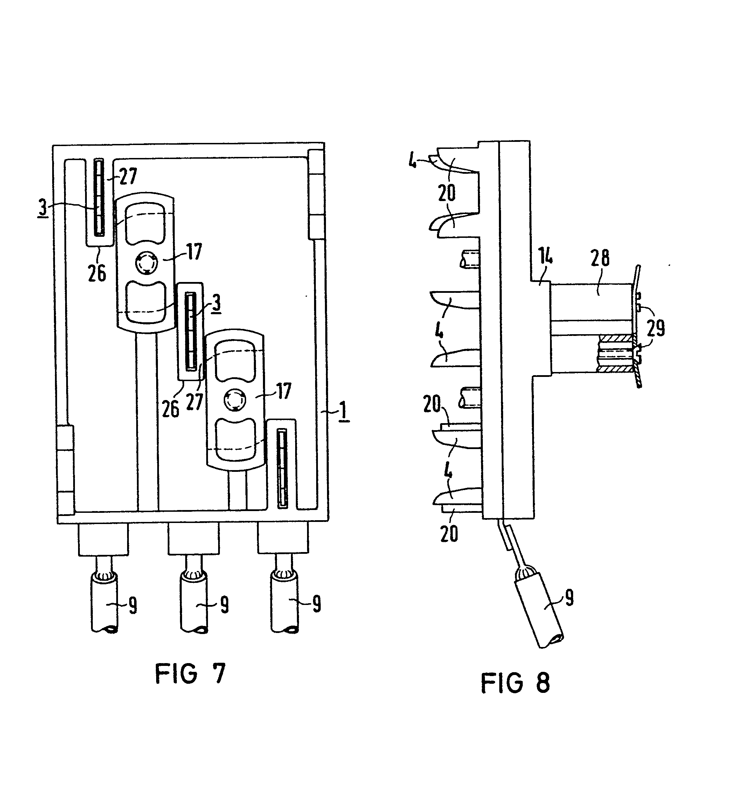

Von den Schraubköpfen 19 nach Fig. 5 aus können die Spannriegel 17 nach Fig. 7 von einer zur dargestellten Spannstellung senkrechten Ausgangstellung aus betätigt werden. In der Ausgangsstellung liegen die Spannriegel 17 jeweils an einer Stirnseite 26 eines gabelförmigen Kontaktes 3 an und werden dann um 90° beim Spannen verdreht, bis sie an der Flanke 27 des Kontaktes 3 anliegen. Im Basiskörper 1 sind im Ausführungsbeispiel drei Kontakte 3 angeordnet, zwischen denen die Spannriegel 17 bei entsprechender Länge also so angeordnet sind, dass sie bei Linksdrehung der Schraube sich zumindest an einer Stirnseite 26 – im Ausführungsbeispiel an zwei Stirnseiten benachbarter Kontakte – eines Kontaktes anlegen und bei Rechtsdrehung an dessen Flanke 27.

Nach Fig. 8 ist die Tragschiene 13 als randseitig hochgekröpftes Metallband ausgebildet, das auf einem auf dem Sockel 14 aufgesetzten Zwischenstück 28 befestigt ist. Hierzu können Schrauben 29 bis in den Sockel 14 greifen.

## Patentansprüche

1. Einrichtung zur mechanischen Halterung und elektrischen Verbindung von Installationsgeräten, wie Leitungsschutzschaltern, Fehlerstromschutzschaltern, Sicherungen und dgl., an bzw. mit Stromschienen (21), die einen im wesentlichen plattenförmigen Grundkörper (1) aus Isolierstoff aufweist, der Träger von auf die Stromschienen (21) aufsetzbaren gabelförmigen Kontakten (3) ist, die in ‹–› mit ersten Enden von an dem plattenförmigen Grundkörper (1) festgelegten Verbindungsschienen (7) ‹elektrischer Verbindung› stehen, an deren zweiten, im Randbereich des Grundkörpers (1) liegenden Enden Anschlussstellen für die elektrische Verbindung mit den zu halternden Installationsgeräten (25) vorgesehen sind, dadurch gekennzeichnet, dass der plattenförmige Grundkörper (1) und jedes erste Ende der Verbindungsschienen (7) im Bereich des diesem Ende zugeordneten gabelförmigen Kontaktes (3) je eine Ausnehmung (2, 8) aufweisen, die von zwei den gabelförmigen Kontakt (3) bildenden Kontaktstücken durchragt werden, dass an den Kontaktstücken mittig jeweils eine Kippnase (5) ausgebildet ist, mittels derer sich die Kontaktstücke (4) gegeneinander abstützen, dass benachbart zu diesen Kippnasen (5) auf der den Stromschienen (21) abgewandten Seite der Kontakte (3) zwischen den Kontaktstücken eine diese auseinanderspreizende, die Kontaktstücke (4) in der Ausnehmung (8) der zugehörigen Verbindungsschiene (7) fixierende und den Anpressdruck an die Stromschienen (21) erzeugende Feder (6) angeordnet ist und dass der plattenförmige Grundkörper (1) Träger zumindest von einer der Befestigung für die Installationsgeräte dienenden Profilschiene (13) ist.

2. Einrichtung nach Anspruch 1, dadurch gekennzeichnet, dass die Ausnehmungen (2, 8) schlitzförmig und die Kontaktstücke (4) spiegelsymmetrisch und flach ausgebildet sind.

3. Einrichtung nach Anspruch 1, dadurch gekennzeichnet, dass die Feder (6) haarnadelförmig ausgebildet und ihre Erstreckungsebene senkrecht zur Erstreckungsebene des zugehörigen gabelförmigen Kontaktes (3) liegt.

4. Einrichtung nach Anspruch 1, dadurch gekennzeichnet, dass die innere Maulöffnung (10) des gabelförmigen Kontaktes (3) geringfügig kleiner als die Breite der Stromschiene (21) ist und dass an der Gabel eine flache Auflaufschräge (11) ausgebildet ist.

5. Einrichtung nach Anspruch 1, dadurch gekennzeichnet, dass die Profilschiene (13) an einem im wesentlichen plattenförmigen, am Grundkörper (1) befestigten Abdeckkörper (12) aus Isoliermaterial gehaltert ist.

6. Einrichtung nach Anspruch 5, dadurch gekennzeichnet, dass Grundkörper (1) und Abdeckkörper (12) mittels Hohlnieten (15) miteinander verbunden sind, die Schrauben (16) führen, an deren Ende Spannriegel (17) aus Isolierstoff zur Festlegung der Halterungseinrichtung an den Stromschienen (21) aufgenommen sind.

7. Einrichtung nach Anspruch 6, dadurch gekennzeichnet, dass die gabelförmigen Kontakte (3) und die Spannriegel (17) im Grundkörper (1) derart gestaffelt angeordnet sind, dass die Spannriegel (17) bei Linksdrehung der Schraube (16) sich zumindest an einer Stirnseite (26) eines Kontaktes (3) anlegen und bei Rechtsdrehung an dessen Flanke (27).

8. Einrichtung nach Anspruch 5, dadurch gekennzeichnet, dass die Profilschiene (13) als randseitig hochgekröpftes Metallband ausgebildet ist, das auf einem Sockel (14) des Abdeckkörpers befestigt ist, wobei Zwischenstücke (28) bereitgestellt sind, die den Abstand zwischen Sockel (14) und Metallband vergrössern.

9. Einrichtung nach einem der vorhergehenden Ansprüche, dadurch gekennzeichnet, dass am Grundkörper (1) gabelförmige Halterungen (20) aus Isolierstoff ausgebildet sind.

10. Einrichtung nach Anspruch 6, dadurch gekennzeichnet, dass zwischen Hohlniet (15) und Schraube (16) je ein das Spiel in etwa ausfüllender Bremsring (22) angeordnet ist.

## Claims

1. A device for mechanically holding and electrically connecting installation apparatus, such as conduction circuit breakers, earth-leakage circuit breakers, fuses and the like, on or to bus bars (21) which possess an essentially plate-shaped basic body (1) of on an insulating material and which constitutes the carrier of fork-like contacts (3) which can be placed onto the bus bars (21) and are electrically connnected to first ends of connecting rails (7) secured to the plate-shaped basic body (1), and at the second ends of which contacts, in the boundary region of the basic body (1), terminal points are arranged for electrical connection to the installation apparatus (25) to be held, characterised in that the plate-shaped basic body (1) and each first end of the connecting rails (7) have a respective recess (2, 8) in the region of the fork-shaped contact (3) which is assigned to this end, which recess is penetrated by two contact pieces forming the fork-shaped contact (3), that a tilting projection (5) is centrally formed on the contact pieces, which tilting projection supports the contact pieces (4) against one another, that adjacent to these tilting projections (5), on the side of the contacts (3) remote from the bus bars (21), there is arranged between the contact pieces a spring (6) which forces apart the contact pieces (4), fixes the contact pieces (4) in the recess (8) of the assigned connecting rail (7), and produces contact pressure to the bus bars (21), and that the plate-shaped basic body (1) is the carrier of at least one profile rail (13) which serves to fix the installation apparatus.

2. A device as claimed in Claim 1, characterised in that the recesses (2, 8) are slot-shaped and the contact pieces (4) are mirror-symmetrical and flat.

3. A device as claimed in Claim 1, characterised in that the spring (6) is shaped like a hairpin and the plane in which it extends is arranged at right angles to the plane of the assigned fork-shaped contact (3).

4. A device as claimed in Claim 1, characterised in that the inner jaw opening (10) of the fork-shaped contact (3) is negligibly smaller than the width of the bus bar (21) and that a flat abutting slope (11) is formed on the fork.

5. A device as claimed in Claim 1, characterised in that the profile rail (13) is held on an essentially plate-shaped cover body (12) made of an insulating material and secured to the basic body (1).

6. A device as claimed in Claim 5, characterised in that the basic body (1) and the cover body (12) are connected to one another by means of hollow rivets (15), which guide screws (16) at whose ends tie pieces (17) made of an insulating material are accommodated to fix the holder on the bus bars (21).

7. A device as claimed in Claim 6, characterised in that the fork-shaped contacts (3) and the tie pieces (17) are staggered in the basic body (1) such that during a counterclockwise rotation of the screw (16) the tie pieces (17) abut upon at least one end face (26) of a contact (3), and upon the flank (27) thereof during a clockwise rotation.

8. A device as claimed in Claim 5, characterised in that the profile rail (13) is designed as a metal strip which is upwardly bent at right angles at the edge and is secured to a support (14) of the cover body, where intermediate pieces (28) are provided which increase the distance between the support (14) and the metal strip.

9. A device as claimed in one of the preceding Claims, characterised in that fork-shaped holders (20) made of an insulating material are constructed on the basic body (1).

10. A device as claimed in Claim 6, characterised in that a braking ring (22) which approximately fills the free space is arranged between the hollow rivet (15) and screw (16).

## Revendications

1. Dispositif de fixation et de connexion électrique d'appareillages d'installations, tels que disjoncteurs de protection de lignes, disjoncteurs de protection à courant de défaut, coup-circuit et similaires, sur ou avec des barres conductrices (21), qui comporte un corps de base (1) fait avec un matériau isolant, se présentant essentiellement sous la forme d'une plaque et qui est le support pour des contacts (3) en forme de fourche, qui sont susceptibles d'être montés sur les barres conductrices (21) et qui sont en contact électrique avec des premières extrémités de rails de connexion (7) fixés au corps de base (1) en forme de plaque, alors qu'aux secondes extrémités de ces derniers, qui se situent dans la zone périphérique du corps de base (1), sont prévus des points de branchement pour la connexion électrique des appareils (25) à fixer, caractérisé par le fait que le corps de base (1) en forme de plaque et chaque première extrémité des rails de connexion (7) présentent, dans la zone du contact en fourche (3) associée à cette extrémité, des ouvertures respectives (2, 8) qui sont traversées par deux pièces de contact qui forment les contacts en fourche (3), qu'au niveau du milieu des pièces de contact sont conformés des becs de basculement (5) à l'aide desquels les pièces de contact (4) prennent appui l'une contre l'autre, que dans le voisinage de ces becs de basculement (5) est prévu sur le côté des contacts (3) éloigné des barres conductrices (21) et entre les pièces de contact, un ressort (6) qui écarte les pièces de contact (4) l'une de l'autre, qui fixe ces dernières dans l'ouverture (8) du rail de connexion correspondant (7) et qui produit la pression d'application contre les barres conductrices (21), et que le corps de base (1) en forme de plaque est porteur d'au moins un rail profilé servant à la fixation des appareils de l'installation.

2. Dispositif selon la revendication 1, caractérisé par le fait que les ouvertures (2, 8) ont la forme de fentes et que les pièces de contact (4) sont symétriques par rapport à un plan et sont plates.

3. Dispositif selon la revendication 1, caractérisé par le fait que le ressort (6) a la forme d'une épingle à cheveux et que son plan d'extension est perpendiculaire au plan d'extension du contact fourchu associé (3).

4. Dispositif selon la revendication (1), caractérisé par le fait que l'ouverture d'entrée intérieur (10) du contact fourchu (3) est inférieure à la largeur des barres conductrices (21), et que sur la fourche est réalisé un plan d'engagement plat (11).

5. Dispositif selon la revendication 1, caractérisé par le fait que le rail profilé (13) est fixé à un corps de couvercle ayant essentiellement la forme d'une plaque, fixé au corps de base (1) et constitué avec un matériau isolant.

6. Dispositif selon la revendication 5, caractérisé par le fait que le corps de base (1) et le corps de couvercle (12) sont reliés à l'aide de rivets creux (15) qui guident des vis (16) aux extrémités desquelles sont reçus des verrous de serrage (17) en matériau isolant pour fixer le dispositif de fixation aux barres conductrices (21).

7. Dispositif selon la revendication 6, caractérisé par le fait que les contacts fourchus (3) et les verrous de serrage (17) sont disposés dans le corps de base (1) avec un décalage tel que les verrous de serrage (17), lorsque la vis (16) est tournée vers la gauche, s'appliquent au moins contre un côté frontal (26) d'un contact (3), et contre le flanc (27) de ce dernier, lorsque la vis est tournée vers la droite.

8. Dispositif selon la revendication 5, caractérisé par le fait que le rail profilé (13) est réalisé sous la forme d'une bande métallique à excroissance marginale, laquelle bande métalllique est fixée sur un socle (14) du corps de couvercle, des entretoises (28) étant préparées pour augmenter la distance entre le socle (14) et la bande métallique.

9. Dispositif selon l'une des revendications précédentes, caractérisé par le fait que sur le corps de base (1) sont conformés des moyens de support en fourche (20) en un matériau isolant.

10. Dispositif selon la revendication 6, caractérisé par le fait qu'entre le rivet creux (15) et la vis (16) est prévu un anneau de freinage (22) comblant sensiblement le jeu.

FIG 1

FIG 2

FIG 3

FIG 4

FIG 5

FIG 6

FIG 7

FIG 8